# EUROPÄISCHE PATENTANMELDUNG

(11) **EP 4 410 713 A1**
(43) Veröffentlichungstag der Anmeldung: **07.08.2024**
(21) Anmeldenummer: 23154289.5
(22) Anmeldetag: 31.01.2023
(51) Int. Cl.: B65G 1/10, B07C 3/02, B64F 1/36

(54) **VERFAHREN UND SPEICHERSYSTEM ZUM SPEICHERN VON LADUNGSTRÄGERN**

(71) Anmelder: Siemens Logistics GmbH, 90429 Nürnberg (DE)
(72) Erfinder: SCHWINGE, Christian Oliver, 90556 Cadolzburg (DE)
(74) Vertreter: Siemens Patent Attorneys

(57) **Zusammenfassung**

Flughafen-Frühgepäckspeicher (2) erfüllen viele Funktionen. Die Erfindung offenbart ein hierzu geeignetes Speichersystem (2) und Verfahren zum Speichern von leeren oder mit Stückgütern (4a) mit Sortierkriterium, beladenen einheitlichen Ladungsträgern (4), umfassend einen Förderer (6), eine Ladevorrichtung (8), ein fahrerloses Transportfahrzeug (16), Regale (12) mit Regalfächern (14) zur Aufnahme der Ladungsträger 4() und ein Steuerungssystem. Die Ladungsträger (4) sind eindeutig identifizierbar und mit einem Sortierkriterium assoziierbar. Das Steuerungssystem ist ausgestaltet, bei einem beladenen Ladungsträger (4) das Sortierkriteriums des Stückguts (4a) in dem Ladungsträger (4) zu bestimmen und dieses Sortierkriterium dem Ladungsträger (4) zuzuordnen und bei einem leeren Ladungsträger (4) ein leeres Sortierkriterium dem Ladungsträger (4) zuzuordnen, ein Regal (12) mit einem freien Regalfach (14) als bevorzugtes Regal (12*) auszuwählen. Die Ladevorrichtung (8) ist ausgestaltet zur selektiven Aufnahme und/oder Abgabe eines Ladungsträgers (4) von dem bzw. an den Förderer (6) und zum Be- und/oder Entladen des bevorzugten Regals (12*) mit diesem Ladungsträger (4). Das fahrerlose Transportfahrzeugs (16) ist an dem bevorzugten Regal (12*) reversibel anbringbar, um das bevorzugten Regal (12*) hin zu einer durch das spezifische Speicherkriterium bestimmten Speicherposition in einem Speicherbereich (18) und umgekehrt zu bewegen.

## Beschreibung

Die vorliegende Erfindung betrifft das technische Gebiet der Fördersysteme, genauer der Speichersysteme für Ladungsträger. Die Ladungsträger eignen sich zur Aufnahme von Stückgütern, die Erfindung eignet sich jedoch auch für leere Ladungsträger. Insbesondere betrifft die Erfindung Frühgepäckspeicher im Flughafenbereich.

Im Flughafenumfeld ist es notwendig Gepäck von Passagieren temporär für mehrere Stunden zu speichern. Grund für diese Frühgepäckspeicherung kann ein sehr früher Check In, eine Verspätung des Abfluges, ein längerer Zwischenstopp sein. Im Prozess des Flughafenbetreibers tritt am wenigsten Mehraufwand auf, wenn dieses Gepäck in der Gepäckförderanlage zwischengelagert wird und zeitlich passend zur Verladung in das Flugzeug ausgelagert wird. Je unkomplizierter, günstiger und ausfallsicherer Betrieb und Aufbau eines Frühgepäckspeichers sind, umso mehr kann die Gepäckförderanlage von Gepäckstücken entlastet werden, deren Abfertigungszeitpunkt auch nur wenig in der Zukunft liegt.

Es gibt verschiedene Lösungsansätze mittels Linienspeichern in Gurt- oder Wannenanlagen, umlaufende Fördertechnikloops, oder ähnliche Ansätze. Hier ist jedoch ein Zugriff auf spezifische Gepäckstücke nur schwer möglich, das Tracking einzelner Gepäckstücke komplex und die existierenden Lösungen haben einen hohen dreidimensionalen Raum- und Energiebedarf. Am weitesten verbreitet sind Hochregallager, die entweder auf Regalbediengeräten oder Shuttlelösungen basieren. Verfügbare Lösungen sind in der Regel komplex in Planung, Aufbau, Design, Umsetzung sowie Betrieb. Bei Planung und Installation müssen diese Lösungen zudem bereits auf die maximal erwartete Kapazität ausgelegt werden, sämtliche Investitionskosten fallen somit zu einem sehr frühen Zeitpunkt an. Zudem ist eine flexible und kostengünstige Erweiterung nicht möglich, zudem blockieren Ausfälle einzelner Komponenten das gesamte System. Viele Gepäckfördersysteme in Flughäfen sind als wannengestützte Gepäckförderanlagen (ICS = Individual Carrier System) ausgestaltet. Der Vorteil eines wannengestützte Basissystems ist die immer einheitliche Form der Ladungsträger (Gepäckwannen), wodurch das Förderverhalten aller Ladungsträger sehr einheitlich ist, sowie die eindeutige, automatisierte und nahezu 100%ige Gepäckidentifizierung mittels RFID an den (Gepäck-)Wannen. Zudem verhindern die Ladungsträger das Einklemmen loser Teile in der Gepäckförderanlage und der Transport ist gutschonend. Ein weiterer Vorteil von Wannen ist der einfache Zugriff zum Be- und Entladen, die höhere erzielbare Fördergeschwindigkeit, die Einheitlichkeit (die eine standardisierte und somit unkompliziertere Ausfertigung der Komponenten erlaubt, wobei die Komponenten nur für die einheitlichen Ladungsträger und nicht für eine hohe Variation unterschiedlicher Stückgüter ausgestaltet werden müssen). Auch in anderen Bereichen der Logistik kommen wannengestützte Förderanlagen zum Einsatz, in denen Stückgüter in Ladungsträgern transportiert und zwischengespeichert werden. Die Erfindung eignet sich auch für nicht-wannengestützte Förderanlagen, der Speicherbereich ist jedoch stets auf Stückgüter in Ladungsträgern, insbesondere Wannen, ausgelegt.

Der vorliegenden Erfindung liegt daher die Aufgabe zugrunde, ein Verfahren und ein System zum verbesserten Speichern von Ladungsträgern bereitzustellen. Diese Aufgabe wird durch die in den unabhängigen Ansprüchen beschriebenen Lösungen gelöst.

Gelöst wird diese Aufgabe durch ein Verfahren und ein Speichersystem mit den Merkmalen der Hauptansprüche.

Die erfindungsgemäße Lösung zeichnet sich aus durch ein Verfahren zum Speichern von leeren oder mit Stückgütern, insbesondere Gepäckstücken, beladenen einheitlichen Ladungsträgern, insbesondere Gepäckwannen, wobei die Stückgüter ein zugordnetes Sortierkriterium aufweisen, die Ladungsträger eindeutig identifizierbar und mit einem Sortierkriterium assoziierbar sind, aufweisend die Verfahrensschritte:
a) Fördern eines Stückguts oder eines Ladungsträgers auf einem Förderer und Aufnehmen des Stückguts bzw. des Ladungsträgers durch eine Ladevorrichtung in einem Übergabebereich, wobei bei einem Stückgut das Stückgut von dem Förderer auf den Ladungsträger überführt wird, während ein Ladungsträger von der Ladevorrichtung gehalten wird.
b) Bei einem beladenen Ladungsträger Bestimmen des Sortierkriteriums des Stückguts in dem Ladungsträger und Zuordnen dieses Sortierkriteriums zu dem Ladungsträger und bei einem leeren Ladungsträger Zuordnen eines leeren Sortierkriteriums zu dem Ladungsträger.
c) Bereitstellen von Regalen mit oder ohne Rädern, jeweils umfassend aufeinander gestapelte Regalfächer zur Aufnahme der Ladungsträger und ein Fahrgestell.
d) Bezeichnen, durch ein Steuerungssystem, von einem der Regale mit einem freien Regalfach als bevorzugtes Regal.
e) Bewegen des Ladungsträgers durch die Ladevorrichtung zu dem bevorzugten Regal im Übergabebereich und Beladen eines freien Regalfachs des bevorzugten Regals mit dem Ladungsträger durch die Ladevorrichtung.
f) Anbringen eines fahrerlosen Transportfahrzeugs an dem bevorzugten Regal.
g) Bewegen des bevorzugten Regals durch das fahrerlose Transportfahrzeug hin zu einer durch das spezifische Speicherkriterium bestimmten Speicherposition in einem Speicherbereich.
h) Lösen des fahrerlosen Transportfahrzeugs von dem bevorzugten Regal.

Die erfindungsgemäße Lösung betrifft zudem ein Speichersystem zum Speichern von leeren oder mit Stückgütern, insbesondere Gepäckstücken, beladenen einheitlichen Ladungsträgern, insbesondere Gepäckwannen, umfassend einen Förderer, eine Ladevorrichtung, ein fahrerloses Transportfahrzeug, Regale und ein Steuerungssystem. Die Stückgüter weisen ein zugordnetes Sortierkriterium auf, die Ladungsträger sind eindeutig identifizierbar und mit einem Sortierkriterium assoziierbar. Die Regale mit oder ohne Rädern weisen aufeinander gestapelte Regalfächer zur Aufnahme der Ladungsträger auf. Die Regale können sehr einfach und somit kostengünstig, z.B. als einfache Stahlregale ausgestaltet sein. Der Förderer ist zum Transportieren von Ladungsträgern oder Stückgütern ausgestaltet. Die Höhe wird bestimmt durch die Höhe des Roboterarms, die zur Verfügung stehende Höhe des Frühgepäckspeichers und die Traglast des fahrerlosen Transportfahrzeugs. Bei einem allzu hohen Regal ist eine manuelle Be- und Entladung bei Ausfällen nicht mehr trivial möglich. Die Ladevorrichtung ist in einem Übergabebereich angeordnet. Das Steuerungssystem ist ausgestaltet, bei einem beladenen Ladungsträger das Sortierkriteriums des Stückguts in dem Ladungsträger zu bestimmen und dieses Sortierkriterium dem Ladungsträger zuzuordnen und bei einem leeren Ladungsträger ein leeres Sortierkriterium dem Ladungsträger zuzuordnen. Das Steuerungssystem ist ausgestaltet, ein Regal mit einem freien Regalfach als bevorzugtes Regal auszuwählen. Die Ladevorrichtung und der Förderer sind ausgestaltet zur selektiven Aufnahme und/oder Abgabe eines Stückguts, während ein Ladungsträger von der Ladevorrichtung gehalten wird oder eines Ladungsträgers von dem bzw. an den Förderer und zum Be- und/oder Entladen des bevorzugten Regals mit diesem Ladungsträger. Das fahrerlose Transportfahrzeugs ist an dem bevorzugten Regal reversibel anbringbar (umfasst Anbringen und Lösen des angebrachten Transportfahrzeugs), um das bevorzugten Regal hin zu einer durch das spezifische Speicherkriterium bestimmten Speicherposition in einem Speicherbereich und umgekehrt zu bewegen. Das Steuerungssystem ist mit der Ladevorrichtung und dem fahrerlosen Transportfahrzeug zum Steuern verbindbar.

So können sich die folgenden Vorteile zusätzlich ergeben: Die Ladungsträger dienen als Behältnis das von einem entsprechenden Werkzeug der Ladevorrichtung (Roboter o.ä.) bewegt wird. Systeme mit Ladungsträgern sorgen für Einheitlichkeit in der Gepäckförderung, erlauben einen zuverlässigeren Betrieb, höhere Geschwindigkeiten und besseren Durchsatz. Da alle Gepäckstücke während der gesamten Gepäckbeförderung vollständig in ihren Ladungsträgern verbleiben, ist das Risiko von beschädigten Gepäckstücken und Systemstörungen (z.B. verursacht durch eingeklemmte Träger o.ä.) gering. Ein und derselbe Speicherbereich kann für eine Zwischenspeicherung von leeren und befüllten Ladungsträgern herangezogen werden. Die Verwendung von fahrerlosen Transportfahrzeugen (AGV, automated guided vehicle) erlaubt sowohl eine einfache Skalierung aufgrund der Modularität, als auch eine hohe Ausfallsicherheit - da das Speichersystem typischerweise mehrere Ladevorrichtungen und mehrere AGVs umfasst, fällt bei einem einzelnen ausgefallen AGV oder einer einzelnen ausgefallen Ladevorrichtung nicht gleich das gesamte Speichersystem aus.

Unter einem Ladungsträger im Sinne der Erfindung soll insbesondere eine Wanne, noch insbesonderer eine Gepäckwanne, verstanden werden, die typischerweise einen Zugriff von oben und dadurch unkompliziertes Be- und Entladen erlaubt. Die Stückgüter sind mit einem Identifikator, bei Gepäckstücken typischerweise einem Gepäckanhänger, versehen. Bei Gepäckstücken ist das Sortierkriterium typischerweise der Flug, es kann jedoch auch die Abfertigungszeit oder ein anderes Kriterium (z.B. zusammenreisende Passagiere) herangezogen werden. Der Übergabebereich entspricht im Wesentlichen der Reichweite der Ladevorrichtung zum Aufnehmen und Abgeben des Ladungsträgers. Das Anbringen eines fahrerlosen Transportfahrzeugs an dem bevorzugten Regal umfasst sämtliche Befestigungsmöglichkeiten, die das Bewegen des Regals durch das angebrachte fahrerlose Transportfahrzeug ermöglichen wie ziehen, schieben oder eine Kombination. Unter einem leeren Sortierkriterium ist ein Sortierkriterium zu verstehen, welches für das Steuerungssystem abbildet, dass es sich um einen auswechselbaren, leeren Ladungsträger handelt. Unter einem einheitlichen Ladungsträger soll verstanden werden, dass alle Ladungsträger gleichartig sind oder es nur sehr wenige Formate verwendet werden, wobei bei den unterschiedlichen Formaten z.B. zumindest eine Seitenlänge übereinstimmt. So ist der Greifprozess für das Be- und Entladen durch die Ladevorrichtung stark vereinfacht, zudem passt jeder Ladungsträger in ein Regalfach.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um die Ladungsträger nach Sortierkriterien geordnet zu sortieren, was ein unnötiges Verschieben von Regalen, sowohl für das Be-, als auch das Entladen vermeidet, kann erfolgen Bestimmen, durch ein Steuerungssystem, ob eines der Regale in der Nähe des Übergabebereichs bereits mit einem Ladungsträger beladen ist, welches mit dem Sortierkriterium des Ladungsträgers übereinstimmt, und ein freies Regalfach, mit der Kapazität den Ladungsträger aufzunehmen, aufweist, somit ein verfügbares Regal ist, und Bezeichnen dieses Regals als bevorzugtes Regal, andernfalls Bezeichnen eines verfügbaren, dem Sortierkriterium des Stückguts noch nicht zugeordneten Regals als bevorzugtes Regal.

Auf das Speichersystem bezogen, kann das Steuerungssystem ausgestaltet sein, zu bestimmen, ob eines der Regale in der Nähe des Übergabebereichs bereits mit einem Ladungsträger beladen ist, welches mit dem Sortierkriterium des Ladungsträgers übereinstimmt, und ein freies Regalfach, mit der Kapazität den Ladungsträger aufzunehmen, aufweist, somit ein verfügbares Regal ist, und dieses Regals als bevorzugtes Regal zu bezeichnen, andernfalls ein verfügbares, dem Sortierkriterium des Stückguts noch nicht zugeordnetes Regal (dieses Regal kann somit leer oder mit mindestens einem Ladungsträger befüllt sein) als bevorzugtes Regal zu bezeichnen.

Gemäß einer Ausführungsform kann das fahrerlose Transportfahrzeug das Regal vor dem Anbringen unterfahren, ist somit ein Unterfahr-AGV. Nach dem Unterfahren kann dieses Unterfahr-AGV an das Regal angebracht werden und dieses dann (ohne Anheben, hierzu muss das Regal Räder aufweisen) Befördern. Oder das Unterfahr-AGV kann das Regal anheben (hierzu muss das Regal keine Räder aufweisen, kann aber), anschließend verfahren und dann absetzen. Durch das Unterfahren ist der kombinierte Raumbedarf von fahrerlosem Transportfahrzeug und Regal geringer, so dass der Platzbedarf für Transportmanöver (wenden, drehen, Kurvenfahrten) geringer ist, somit der Platzbedarf des Speicherbereichs geringer ist. Auch kann ein einzeln ohne Regal durch Gassen zwischen Regalen fahrende AGVs einem anderen AGV (mit oder ohne Regal) durch Unterfahren von Regalen an ihren Speicherpositionen ausweichen.

Gemäß einer Ausführungsform kann das Entladen eines Ladungsträger von einem zu entladenden Regal mit dem Ladungsträger durch die Ladevorrichtung in dem Übergabebereich erfolgen, dem geht ein Bewegen des Regals durch das fahrerlose Transportfahrzeug von seiner Speicherposition im Speicherbereich in den Übergabebereich voran. Das übergeordnete Steuersystem weist das Entladen an, wenn ein Zugriff bzw. Wiedereinbringen des gespeicherten Ladungsträgers in die Gepäckförderanlage erforderlich ist.

Gemäß einer Ausführungsform kann der Speicherbereich auf mehr als einer Ebene angeordnet sein, wobei die Ebenen des Speicherbereichs auf Höhe und/oder oberhalb und/oder unterhalb der Ladevorrichtung liegen. So kann der Platz in hohen Hallen besser ausgenutzt werden und bestehende Versorgungskellergänge o.ä. können als (Frühgepäck-)Speicher herangezogen werden.

Gemäß einer Ausführungsform kann das Speichersystem zudem umfassen eine Rampe und/oder eine Hebevorrichtung, damit das bevorzugte Regal den Höhenunterschied zwischen den Ebenen mit oder ohne fahrerloses Transportfahrzeug zwischen den Ebenen überwinden kann. So kann das bevorzugte Regal den Höhenunterschied zwischen den Ebenen mit oder ohne fahrerloses Transportfahrzeug mit Hilfe eines Hebevorrichtung und/oder über Rampen überwinden. Die Hebevorrichtung kann als Lift o.ä. ausgestaltet sein, aber auch die Ladevorrichtung kann zum Anheben der Regale ausgestaltet sein.

Anstelle oder zusätzlich zu Rampe oder Hebevorrichtung kann die Ladevorrichtung ausgestaltet sein, Regale auf mehr als einer Ebene zu be- und/oder entladen. Hierzu eignet sich eine Anordnung der Ladevorrichtung (und allfällig des Förderers) zwischen den Ebenen (die Ladevorrichtung kann dann nach oben bzw. unten greifen) oder ein Roboterarm der Ladevorrichtung kann in ausreichender Länge ausgestaltet werden. Somit kann das Be- und Entladen von Regalen durch die stationäre Ladevorrichtung auf unterschiedlichen Ebenen erfolgen.

Gemäß einer weiteren Ausführungsform können mehrere Regale in dem Übergabebereich derart anordenbar sein, dass die Ladevorrichtung diese mehreren Regale ohne Repositionierung beladen kann. So kann die Ladevorrichtung ohne Repositionierung (diese würde aufgrund des Zeitbedarfs den Durchsatz und zudem die Anzahl aktuell verfügbarer fahrerloser Transportfahrzeuge verringern und somit den Bedarf an fahrerlosen Transportfahrzeugen und somit die Kosten des Speichersystems erhöhen) zwischen den Ladevorgängen Ladungsträger mit unterschiedlichen Sortierkriterien be- bzw. entladen. Für einen höheren Durchsatz können mehr als eine Ladevorrichtung für denselben oder in unterschiedlichen Übergabebereichen herangezogen werden.

Gemäß einer Ausführungsform kann das Aufnehmen eines leeren Ladungsträgers durch die Ladevorrichtung erfolgen, vorzugsweise im Übergabebereich. So kann die Ladevorrichtung auch ein Stückgut vom Förderer aufnehmen und ein mit einem Stückgut befüllten Ladungsträger in ein Regalfach laden.

Gemäß einer weiteren Ausführungsform kann ein Bestimmen von benachbarten Speicherpositionen von Regalen mit übereinstimmenden Sortierkriterien erfolgen. So können die Gepäckstücke eines Fluges in einem Unterbereich des Speicherbereichs angeordnet sein, was auch bei Ausfall des übergeordneten Steuerungssystems ein Zusammensuchen aller Ladungsträger mit übereinstimmenden Sortierkriterien erleichtert.

Gemäß einer weiteren Ausführungsform können die Regale auch ohne fahrerloses Transportfahrzeug manuell verfahren werden, so dass auch bei Ausfall/Mangel von AGVs manuell unterstützt werden kann.

Gemäß einer Ausführungsform kann ein Be- und Entladen an unterschiedlichen Übergabebereichen und somit räumlich flexibel erfolgen.

Das Speichersystem weist, soweit übertragbar, die gleichen Vorteile auf, welche bezüglich des vorgestellten Verfahrens aufgeführt sind. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Speichersystem kombinierbar. So sind Verfahrensmerkmale auch als Eigenschaft der entsprechenden Vorrichtungseinheit gegenständlich formuliert zu sehen und umgekehrt.

Ausführungsformen der Erfindung werden nachfolgend anhand der Figuren beispielsweise näher erläutert. Dabei zeigen:
- Figur 1: in Aufsicht einen Übergabebereich eines Frühgepäckspeichers;
- Figur 2: in Aufsicht eine Gepäckförderanlage umfassend zwei überdimensioniert dargestellte Sub-Speichersysteme eines Frühgepäckspeichers;
- Figuren 3+4: verschiedene Ausführungsformen einen Frühgepäckspeichers;
- Figuren 5+6: Übergabebereich und Förderer verschiedener Ausführungsformen eines Frühgepäckspeichers;
- Figur 7: Übergabebereiche zum Beladen (Figur 7a) und Entladen (Figur 7b) von Stückgütern in Ladungsträgern.

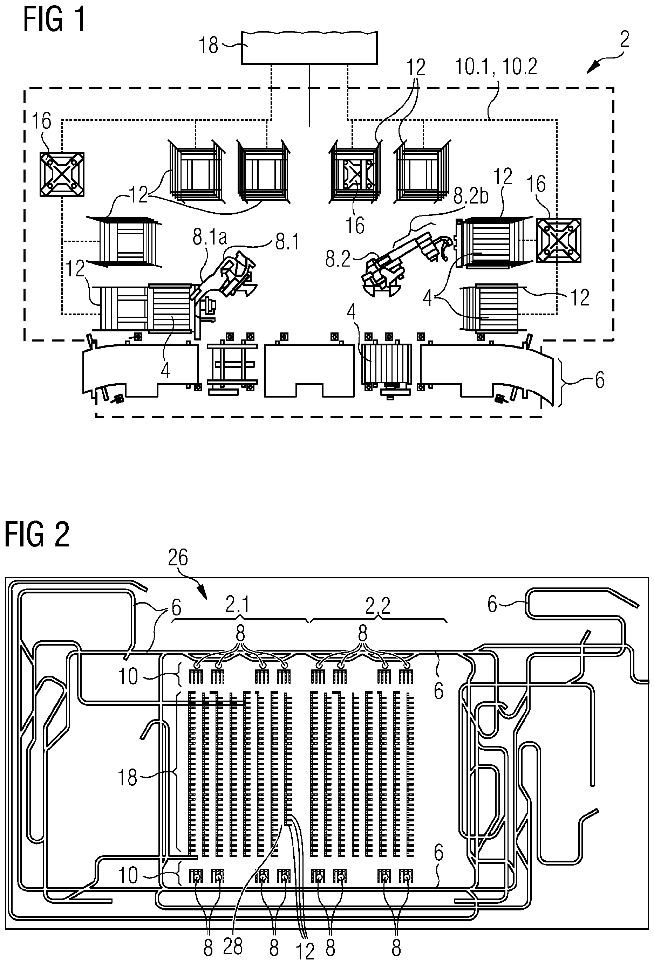

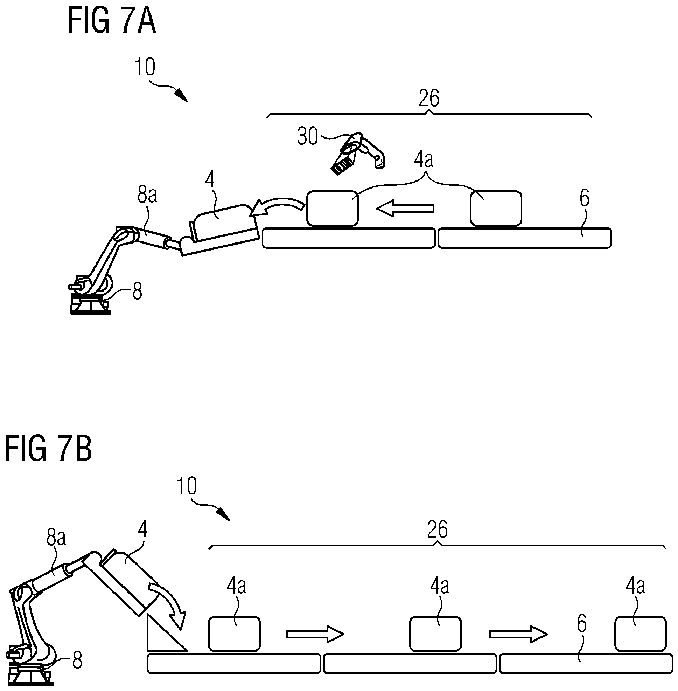

Die nachfolgend beschriebenen Ausführungsformen von Vorrichtung und Verfahren beziehen sich exemplarisch als Speichersystem 2 auf einen Frühgepäckspeicher 2 eines Flughafens, alle Ausführungsformen sind jedoch auch für andere Arten von Speichersystemen 2 in der Logistik anwendbar. So können in jeder der nachfolgenden Ausführungsformen die Begriffe Gepäckstückstück 4a und Gepäckwanne 4 durch das allgemeinere Stückgut 4a und Ladungsträger 4 / Wanne 4 ersetzt werden. Die Gepäckförderanlagen der Figuren 1 bis 6 sind als wannengestützte Gepäckförderanlagen ausgestaltet, bei denen die Gepäckstücke 4a in der gesamten Gepäckförderanlage in Gepäckwannen 4, die als Ladungsträger 4 agieren, transportiert werden. In der Gepäckförderanlage von Figur 7 können die Gepäckstücke 4a auch ohne Gepäckwannen 4 transportiert werden, der Frühgepäckspeicher 2 als Speichersystem 2 für Frühgepäck hingegen ist wannengestützt. Die Wanne 4 dient als vereinheitlichtes Behältnis, das von einem entsprechenden Werkzeug an der Ladevorrichtung 8 bewegt wird. Aufgrund der einfach zukaufbaren, nicht voneinander abhängenden Komponenten (Ladevorrichtung 8, Regale 12, Ladungsträger 4) kann das Speichersystem 2 unkompliziert und ohne Eingriffe in den Betrieb des laufenden Speichersystems 2 unkompliziert erweitert werden, wodurch auch die anfänglichen Investitionskosten gering sind.

Figur 1 zeigt eine Ausführungsform eines Frühgepäckspeichers 2. Zur Durchsatzerhöhung weist dieser zwei Ladevorrichtungen 8.1, 8.2 mit jeweiligen Roboterarmen 8.1a, 8.1b und zwei Übergabebereiche 10.1, 10.2 auf. Der jeweils einer Ladevorrichtung 8 zugeordnete Übergabebereich 10 ist der Bereich, in dem die Ladevorrichtung 8 Gepäckwannen 4 manipulieren kann. Das Sortierkriterium des Gepäckstücks 4a, typischerweise der Flug, in der jeweiligen Gepäckwanne 4 wird bestimmt und der Gepäckwanne 4 wird das Sortierkriterium ihres Gepäckstücks 4a zugeordnet. Gemäß einer Ausführungsform weist die Gepäckwanne 4 einen als RFID-Chip oder anderweitig ausgestalteten Identifikator auf, so dass das Steuerungssystem unkompliziert während des gesamten Verfahrens die genaue Position der Gepäckstücks 4a bzw. der Gepäckwanne 4 abbilden kann. Die Gepäckwannen 4 werden mit einem Förderer 6 zu den Übergabebereichen 10.1, 10.2 transportiert. Wenn Bedarf für eine Zwischenspeicherung eines Gepäckstücks 4a besteht, wird die Gepäckwanne 4 dieses Gepäckstücks 4a von der Ladevorrichtung 8 aufgenommen. Auch leere, auf dem Förderer 6 transportierte Gepäckwannen 4 können von der Ladevorrichtung 8 aufgenommen werden, wobei leeren Gepäckwannen 4 ein leeres Sortierkriterium zugeordnet wird. Somit eignet sich der Frühgepäckspeicher sowohl für Frühgepäck 4a, als auch zur Speicherung leerer Gepäckwannen 4. Diese doppelte Funktionalität ist nützlich sowohl bei hoher, als auch bei niedriger Auslastung der Gepäckförderanlage 26: bei hoher Auslastung gibt es wenig freie Gepäckwannen 4 und großen Bedarf für Frühgepäckspeicherung, bei niedriger Auslastung gibt es viele freie Gepäckwannen 4, somit hohen Bedarf für Gepäckwannenspeicherung und geringen Bedarf für Frühgepäckspeicherung.

Im Übergabebereich 10 sind Regale 12 mit oder ohne Rädern angeordnet, die aufeinander gestapelte Regalfächer 14 zur Aufnahme der Gepäckwannen 4 sowie ein Fahrgestell aufweisen. Ein Steuerungssystem bestimmt eines der Regale 12 mit mindestens einem freien Regalfach 14 als bevorzugtes Regal 12* für die vom Roboterarm 8a der Ladevorrichtung 8 zuvor aufgenommene und nun gehaltene Gepäckwanne 4. Die Ladevorrichtung 8 belädt ein freies Regalfach 14 des bevorzugten Regals 12* mit dieser Gepäckwanne 4. Anschließend wird ein fahrerloses Transportfahrzeug (AGV) 16 an dem bevorzugten Regal 12* angebracht und dieses von dem AGV 16 hin zu einer durch das Speicherkriterium bestimmten Speicherposition bewegt und dann das AGV 16 von dem bevorzugten Regal 12* gelöst.

Figur 1 zeigt eine exemplarische Anordnung von vier Regalen 12 im Übergabebereich 10, wobei auch außerhalb des Übergabebereichs 10, also im Speicherbereich 18, weitere Regale 12 bereitgestellt werden. Gemäß einer Ausführungsform bestimmt das Steuerungssystem vorzugsweise eines der Regale 12 im Übergabebereich 10 oder - wenn diese Regale 12 bereits mit anderen Gepäckwannen 4 beladen sind, deren Sortierkriterien nicht mit dem Sortierkriterium der zu ladenden Gepäckwanne 4 übereinstimmen - eines der Regale 12 in der Nähe des Übergabebereichs 10 als bevorzugtes Regal 12*. So werden die Wege, welche die Regale 12, 12* mit dem AGV 16 zurücklegen müssen, minimiert. Vorzugsweise wird ein Regal 12 als bevorzugtes Regal 12* ausgewählt, welches bereits mit mindestens einer Gepäckwanne 4 beladen ist, die mit dem Sortierkriterium der zu ladenden Gepäckwanne 4 übereinstimmt. Wenn dies nicht möglich ist, wird ein verfügbares Regal 12 (d.h. ein noch komplett leeres Regal 12 oder - bei mangelnder Verfügbarkeit - ein Regal mit mindestens einem freien Regalfach 14) als bevorzugtes Regal 12* bezeichnet.

Figur 2 zeigt gemäß einer weiteren Ausführungsform eine Gepäckförderanlage 26 umfassend zwei überdimensioniert dargestellte Sub-Speichersysteme 2.1, 2.2 eines Frühgepäckspeichers 2. Die Ladevorrichtungen 8 und somit die Übergabebereiche 10 der Übergabestationen 8 sind entlang Förderern 6 angeordnet. Mehrere Regale 12 sind in jedem Übergabebereich angeordnet. Bei sehr geringer Auslastung des Frühgepäckspeichers 2 kann die Anzahl der Regale 12 in den Übergabebereichen 10 bereits ausreichend sein, so dass auf ein Verfahren der Regale 12 verzichtet werden kann. Die steuerungstechnische Aufteilung in Sub-Speichersysteme 2.1, 2.2 reduziert die Fahrwege der AGVs 16. In dem Speicherbereich 18 werden die Regale 12 jeweils in Zweierreihen mit Gassen 28 angeordnet. So kann auf jedes Regal 12 zum Verschieben individuell zugegriffen werden. Gemäß einer Ausführungsform ist die Gasse 28 breit genug, dass ein Regal 12 mit befestigtem AGV 16 passieren kann. Um in größeren Speicherbereichen 18 Kreuzungen von gerade transportierten Regalen 12 zu ermöglichen, wird entweder die Gasse 28 verbreitert werden, oder es werden Leerstellen (zufällig vorhandene oder extra dafür vorgesehene) in den Zweierreihen in der Art einer Straßenausweichbucht zum Ausweichen herangezogen.

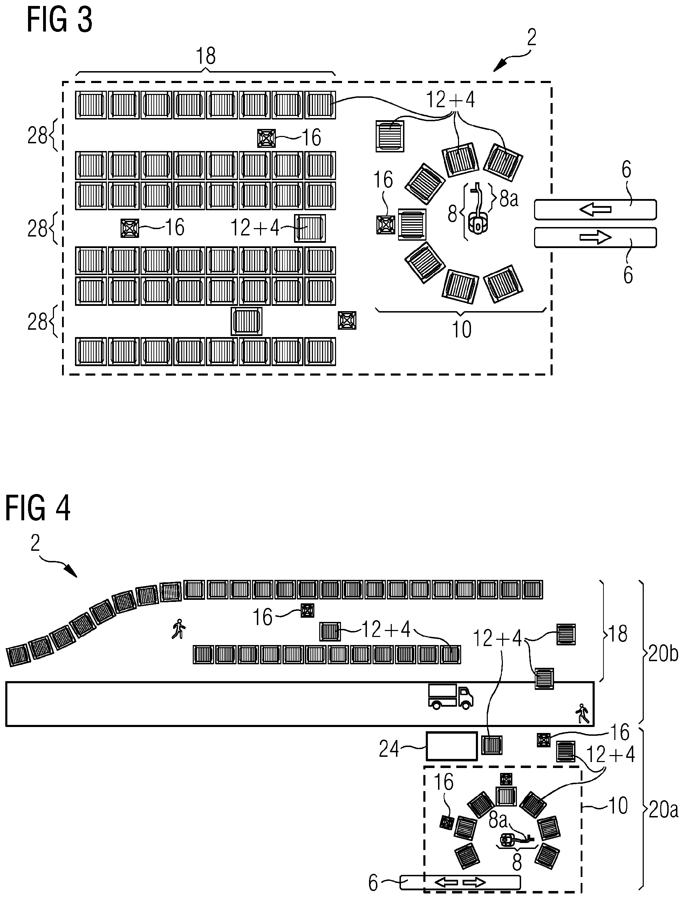

Figur 3 zeigt einen Frühgepäckspeicher 2 gemäß noch einer weiteren Ausführungsform. Die AGVs 16 sind als Unterfahr-AGVs 16 ausgestaltet, d.h. ein Unterfahr-AGV 16 unterfährt das bevorzugte Regal 12*, wird an dem bevorzugten Regal 12* angebracht und bewegt dieses dann zu der durch das Speicherkriterium der Gepäckwanne 4 bestimmten Speicherposition im Speicherbereich 18. Vorteil eines Unterfahr-AGVs 16 ist der geringe Platzbedarf beim Bewegen des Regals 12, identisch mit dem Platzbedarf des Regals 12 ohne angebrachtes AGV 16. Zudem kann ein Unterfahr-AGV 16 in einer Gasse 28 einem entgegenkommenden AGV16 oder einem entgegenkommenden Regal 12 samt AGV 16 einfach ausweichen, indem es unter ein Regal 12 in Speicherposition fährt.

Wenn ein gespeichertes Gepäckstück 4a samt Gepäckwanne 4a (bzw. wenn alle Gepäckwannen 4a mit übereinstimmenden Sortierkriterien, dies ist beispielsweise der Fall bei einem nahenden Abflug) oder eine gespeicherte leere Gepäckwanne 4 wieder in die Gepäckförderanlage 26 eingebracht werden soll, wird das Steuerungssystem das Regal 12 mit der auszubringenden Gepäckwanne 4 als bevorzugtes Regal 12* bezeichnen, ein AGV 16 angewiesen, zu der Speicherposition zu fahren, das AGV 16 wird das bevorzugte Regal 12* unterfahren und an ihm angebracht und anschließend wird das bevorzugte Regal hin zum Übergabebereich 10 bewegt. Die Ladevorrichtung 8 wird dann die Gepäckwanne 4a aus dem bevorzugten Regal 12* auf den Förderer 6 entladen. Figur 3 zeigt zwei Förderer 6, wobei ein Förderer 6 zum Zuführen von Gepäckwannen 4 für das Beladen der Regale 12, und der andere Förderer 6 zum Abführen der entladenen Gepäckwannen 4 vorgesehen ist. Alternativ kann die Ladevorrichtung 8 die Gepäckwannen 4a auch von einem bzw. an einen vorbeifördernden Förderer 6 aufnehmen bzw. abgeben - siehe u.a. Figuren 1, 2, 5.

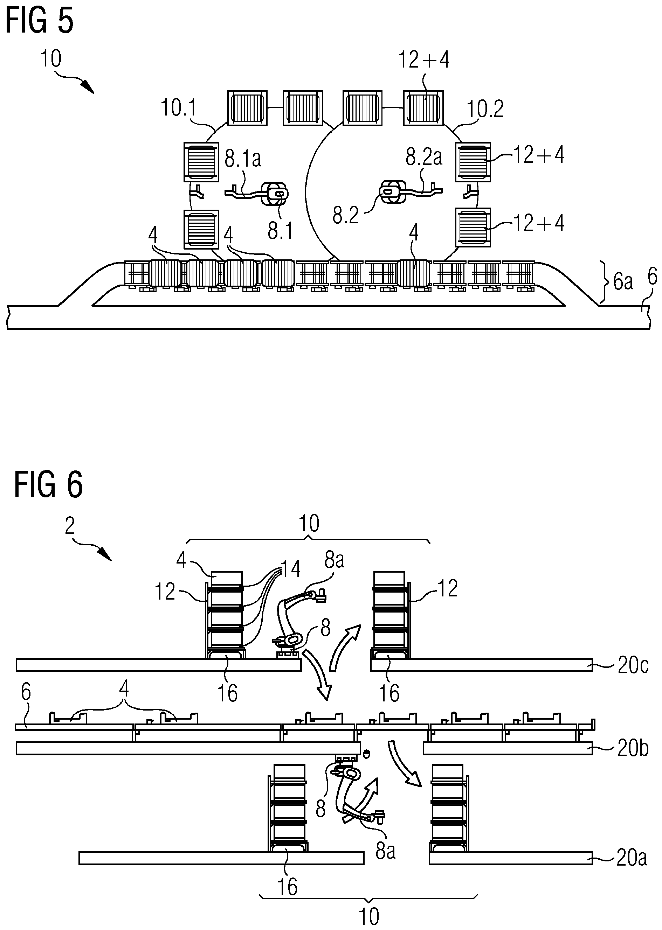

Bei den bisherigen Ausführungsformen sind Förderer 6, Übergabebereich 10 und Speicherbereich 18 auf einer Ebene angeordnet. Die Figuren 4 und 6 zeigen Ausführungsformen mit Anordnungen auf unterschiedlichen Ebenen. So können ungenutzte Kellergänge o.ä. als Speicherbereiche 18 herangezogen werden oder die Höhe einer Halle kann ausgenutzt werden, ohne dass sich der Grundflächenbedarf des Frühgepäckspeichers 2 erhöht. Aufgrund der hohen Modularität können die Regale 12 bzw. die Speicherpositionen im Speicherbereich 18 auf vielfältige Weise angeordnet werden, z.B. um Kurven herum.

In Figur 4 werden die befüllten oder zu entladenden Regale 12 mit Hilfe eines Lifts 24 oder einer anderen Hebevorrichtung von der Ebene 20a des Übergabebereichs 10 in die Ebene 20b des Speicherbereichs 18 gebracht. Je nach Ausgestaltung der Hebevorrichtung 26 werden die Regale 12 den Höhenunterschied mit oder ohne AGV 16 überwinden. Alternativ zu einer Hebevorrichtung 26 kann der Höhenunterschied auch mit Hilfe einer Rampe o.ä. überwunden werden, hierzu muss jedoch das AGV 16 mit einem genügend starken Motor zur Überwindung des Höhenunterschieds ausgestattet sein oder es müssen andere Hilfsmittel (z.B. ein Zugseil) zur Verfügung stehen.

Zur verbesserten Ordnung und Übersichtlichkeit werden Regale 12 mit übereinstimmenden Sortierkriterien wenn möglich im Speicherbereich benachbart, d.h. direkt nebeneinander oder zumindest in der Nähe voneinander, angeordnet. So können - aufgrund der begrenzten Anzahl unterschiedlicher Sortierkriterien - die Gepäckstücke 4a bzw. Gepäckwannen 4 mit gemeinsamen Sortierkriterium auch bei einem Ausfall des übergeordneten Steuerungssystem unkompliziert gefunden werden. Der Ausfall einzelner AGVs 16 kann durch andere AGVs 16 kompensiert werden. Um auch bei einem Komplettausfall aller oder eines Engpasses von AGVs 16 Zugriff auf die Gepäckstücke 4a im Frühgepäckspeicher 2 zu haben, können die Regale 12 gemäß einer Ausführungsform auch manuell verfahren werden.

Figur 5 zeigt eine Ausführungsform eines Übergabebereichs 10 eines Frühgepäckspeichers 2 mit zwei Ladevorrichtungen 8.1, 8.2 und Übergabebereichen 10.1, 10.2 zur Durchsatzerhöhung und Verbesserung der Ausfallsicherheit. Um eine Förderung der nicht für den Frühgepäckspeicher 2 bestimmten Gepäckstücke 4a möglichst nicht zu behindern, weist der Förderer 6 eine Abzweigung 6a auf, die nur für die für den Frühgepäckspeicher 2 bestimmten Gepäckwannen 4 vorgesehen ist.

Figur 6 zeigt eine weitere Ausführungsform eines Ausschnitts eines Frühgepäckspeichers 2, bei dem der Förderer 6 zum Zu- bzw. Abfördern auf einer Ebene 20b angeordnet ist. Oberhalb des Förderers 6 ist eine weitere Ebene 20c angeordnet auf denen eine Ladevorrichtung 8 angeordnet ist und auf welcher die Regale 12 durch AGVs 16 hin zu einem oberen, bildlich nicht dargestellten Speicherbereich 18 transportiert werden. Der Roboterarm 8a der Ladevorrichtung 8 ist lang genug ausgestaltet, so dass er nach unten zum Förderer 6 nach einer Gepäckwanne 4 greifen und diese in das bevorzugte Regal 12* auf der oberen Ebene 20c laden kann. Unterhalb des Förderers 6 ist eine untere Ebene 20a angeordnet. Die Ladevorrichtung 8 zum Be- und Entladen der Regale 12 der unteren Ebene 20a ist in dieser Ausführungsform erhöht angebracht, um auch ohne stark verlängerten Roboterarm 8a Gepäckwannen 4 von dem Förderer 6 greifen und diese in das bevorzugte Regal 12* auf der unteren Ebene 20a laden zu können. Alternativ kann die untere Ladevorrichtung 8 auch auf der unteren Ebene 20a positioniert werden, dies erfordert dann aber einen entsprechend langen Roboterarm 8a. Die Übergabegereiche 10 der Ladevorrichtungen 8 erstrecken sich in dieser Ausführungsform somit jeweils über zwei Ebenen 20c, 20b; 20b, 20a.

Die unterschiedlichen Ebenen 20a, 20b, 20c können gemäß einer Ausführungsform in einer großen Halle mit Plattformen realisiert werden. Gemäß einer weiteren Ausführungsform kann sich der Frühgepäckspeicher 2 auch über noch mehr Ebenen 20 erstrecken, wobei hierbei
- Ladevorrichtungen 8 mit noch längeren Roboterarmen 8a herangezogen werden können
- und/oder Förderer 6 auf unterschiedlichen Ebenen 20 realisiert werden können (quasi mehrere Frühgepäckspeicher 2 der Figur 6 übereinander gestapelt)
- und/oder ausgehend von der oberen Ebene 20c und/oder der unteren Ebene 20a Hebevorrichtungen 24 oder Rampen zu weiteren Ebenen 20, in denen sich die Speicherbereiche 18 befinden, herangezogen werden können.

Figur 7 zeigt eine weitere Ausführungsform, bei der auf der Gepäckförderanlage 26 Gepäckstücke 4a ohne Gepäckwannen 4 transportiert werden, der Frühgepäckspeicher 2 jedoch auf Gepäckwannen 4 basiert. Figur 7a zeigt das Beladen des von dem Förderer 6 herantransportierten Gepäckstücks 4a auf die Ladevorrichtung 8, die bereits eine Gepäckwanne 4 hält. Vor dem Beladen des Gepäckstücks 4a auf die Gepäckwanne 4 wird das Sortierkriterium des Stückguts mit einer Detektionseinheit 30 bestimmt. Anschließend wird die Gepäckwanne 4 samt Gepäckstück 4a wie in den anderen beschriebenen Ausführungsformen auf das bevorzugte Regal 12* geladen. Vor der erneuten Aufnahme eines weiteren Gepäckstücks 4a von dem Förderer 6 nimmt die Ladevorrichtung 8 eine in einem der Regale 12 oder anderswo gelagerte Gepäckwanne 4 auf.

Figur 7b zeigt das Entladen eines Gepäckstücks 4a von der Ladevorrichtung 8, während diese weiterhin die Gepäckwanne 4 hält. In den gezeigten Ausführungsformen der Figuren 7a, 7b wird von einem Förderer 6 beladen (Figur 7a) und auf einen weiteren Förderer 6 entladen (Figur 7b), wobei das Be- bzw. Entladen des Stückguts 4a auf den bzw. von dem Förderer 6 jeweils am Ende des Förderers 6 stattfindet. Für das Beladen wird die Gepäckwanne 4 direkt an den Förderer, evtl. leicht unterhalb platziert. Für ein sicheres und gepäckschonendes Entladen ist der aufnehmende Förderer 6 der Figur 7b mit einer Rampe 22 ausgestattet und die Ladevorrichtung 8 hält die Gepäckwanne 4 schräg, damit das Gepäckstück 4a herausgleitet. Bei dieser Form der Be- und Entladung können die zu- und abführenden Förderer 6 auch direkt übereinander (mit genügend Platz dazwischen für die zu transportierenden Gepäckstücke 4a) angeordnet sein, so dass ein- und dieselbe Ladevorrichtung 8 für das Be- und Entladen verwendet werden kann.

### Bezugszeichenliste

- 2: Speichersystem
- 4a: Stückgut
- 4: Ladungsträger
- 6: Förderer
- 8: Ladevorrichtung
- 8a: Roboterarm
- 10: Übergabebereich
- 12: Regal
- 12*: bevorzugtes Regal
- 14: Regalfach
- 16: fahrerloses Transportfahrzeug
- 18: Speicherbereich
- 20: Ebene
- 22: Rutsche
- 24: Hebevorrichtung
- 26: Gepäckförderanlage
- 28: Gasse
- 30: Detektionseinheit

## Patentansprüche

1. Verfahren zum Speichern von leeren oder mit Stückgütern (4a), insbesondere Gepäckstücken, beladenen einheitlichen Ladungsträgern (4), insbesondere Gepäckwannen, wobei die Stückgüter (4a) ein zugordnetes Sortierkriterium aufweisen, die Ladungsträger (4) eindeutig identifizierbar und mit einem Sortierkriterium assoziierbar sind, aufweisend die Verfahrensschritte:
a) Fördern eines Stückguts (4a) oder eines Ladungsträgers (4) auf einem Förderer (6) und Aufnehmen des Stückguts (4a) bzw. des Ladungsträgers (4) durch eine Ladevorrichtung (8) in einem Übergabebereich (10), wobei bei einem Stückgut (4a) das Stückgut (4a) von dem Förderer (6) auf den Ladungsträger (4) überführt wird, während ein Ladungsträger (4) von der Ladevorrichtung (8) gehalten wird;
b) bei einem beladenen Ladungsträger (4) Bestimmen des Sortierkriteriums des Stückguts (4a) in dem Ladungsträger (4) und Zuordnen dieses Sortierkriteriums zu dem Ladungsträger (4) und bei einem leeren Ladungsträger (4) Zuordnen eines leeren Sortierkriteriums zu dem Ladungsträger (4);
c) Bereitstellen von Regalen (12) mit oder ohne Rädern, jeweils umfassend aufeinander gestapelte Regalfächer (14) zur Aufnahme der Ladungsträger (4);
d) Bezeichnen, durch ein Steuerungssystem, von einem der Regale (12) mit einem freien Regalfach (14) als bevorzugtes Regal (12*);
e) Bewegen des Ladungsträgers (4) durch die Ladevorrichtung (8) zu dem bevorzugten Regal (12*) im Übergabebereich (10) und Beladen eines freien Regalfachs (14) des bevorzugten Regals (12*) mit dem Ladungsträger (4) durch die Ladevorrichtung (8);
f) Anbringen eines fahrerlosen Transportfahrzeugs (16) an dem bevorzugten Regal (12*);
g) Bewegen des bevorzugten Regals (12*) durch das fahrerlose Transportfahrzeug (16) hin zu einer durch das spezifische Speicherkriterium bestimmten Speicherposition in einem Speicherbereich (18);
h) Lösen des fahrerlosen Transportfahrzeugs (16) von dem bevorzugten Regal (12*).

2. Verfahren nach Anspruch 1, zudem umfassend den Verfahrensschritt
Bestimmen, durch ein Steuerungssystem, ob eines der Regale (12) in der Nähe des Übergabebereichs (10) bereits mit einem Ladungsträger (4) beladen ist, welches mit dem Sortierkriterium des Ladungsträgers (4) übereinstimmt, und ein freies Regalfach (14), mit der Kapazität den Ladungsträger (4) aufzunehmen, aufweist, somit ein verfügbares Regal (12) ist, und Bezeichnen dieses Regals (12) als bevorzugtes Regal (12*), andernfalls Bezeichnen eines verfügbaren, dem Sortierkriterium des Stückguts (4a) noch nicht zugeordneten Regals (12) als bevorzugtes Regal (12*).

3. Verfahren nach einem der Ansprüche 1 bis 2, **dadurch gekennzeichnet, dass**
das fahrerlose Transportfahrzeug (16) das Regal (12) vor dem Anbringen unterfährt.

4. Verfahren nach einem der Ansprüche 1 bis 3, **gekennzeichnet durch**
Entladen eines Ladungsträger (4) von einem zu entladenden Regal (12) mit dem Ladungsträger (4) durch die Ladevorrichtung (8) in dem Übergabebereich (10).

5. Verfahren nach einem der Ansprüche 1 bis 4, **dadurch gekennzeichnet, dass**
der Speicherbereich (18) auf mehr als einer Ebene (20) angeordnet ist, wobei die Ebenen (20) des Speicherbereichs (18) auf Höhe und/oder oberhalb und/oder unterhalb der Ladevorrichtung (8) liegen.

6. Verfahren nach Anspruch 5, **gekennzeichnet durch**
das bevorzugte Regal (12*) den Höhenunterschied zwischen den Ebenen (20) mit oder ohne fahrerloses Transportfahrzeug (16) mit Hilfe eines Hebevorrichtung und/oder über Rampen überwindet.

7. Verfahren nach Anspruch 5 oder 6, **gekennzeichnet durch** Beladen von Regalen (12) durch die stationäre Ladevorrichtung (8) auf unterschiedlichen Ebenen (20).

8. Verfahren nach einem der Ansprüche 1 bis 7, **gekennzeichnet durch**
Aufnehmen eines leeren Ladungsträgers (4) durch die Ladevorrichtung (8).

9. Verfahren nach einem der Ansprüche 1 bis 8, **gekennzeichnet durch**
Bestimmen von benachbarten Speicherpositionen von Regalen (12) mit übereinstimmenden Sortierkriterien.

10. Speichersystem (2) zum Speichern von leeren oder mit Stückgütern (4a), insbesondere Gepäckstücken, beladenen einheitlichen Ladungsträgern (4), insbesondere Gepäckwannen, umfassend einen Förderer (6), eine Ladevorrichtung (8), ein fahrerloses Transportfahrzeug (16), Regale (12) und ein Steuerungssystem, wobei
- die Stückgüter (4a) ein zugordnetes Sortierkriterium aufweisen, die Ladungsträger (4) eindeutig identifizierbar und mit einem Sortierkriterium assoziierbar sind;
- die Regale (12) mit oder ohne Rädern aufeinander gestapelte Regalfächer (14) zur Aufnahme der Ladungsträger (4) aufweisen;
- die Ladevorrichtung (8) in einem Übergabebereich (10) angeordnet ist;
- der Förderer (6) zum Transportieren von Ladungsträgern (4) oder Stückgütern (4a) ausgestaltet ist;
- das Steuerungssystem ausgestaltet ist, bei einem beladenen Ladungsträger (4) das Sortierkriteriums des Stückguts (4a) in dem Ladungsträger (4) zu bestimmen und dieses Sortierkriterium dem Ladungsträger (4) zuzuordnen und bei einem leeren Ladungsträger (4) ein leeres Sortierkriterium dem Ladungsträger (4) zuzuordnen;
- das Steuerungssystem ausgestaltet ist, ein Regal (12) mit einem freien Regalfach (14) als bevorzugtes Regal (12*) auszuwählen;
- die Ladevorrichtung (8) und der Förderer (6) ausgestaltet sind zur selektiven Aufnahme und/oder Abgabe eines Stückguts (4a), während ein Ladungsträger (4) von der Ladevorrichtung (8) gehalten wird oder eines Ladungsträgers (4) von dem bzw. an den Förderer (6) und zum Be- und/oder Entladen des bevorzugten Regals (12*) mit diesem Ladungsträger (4);
- das fahrerlose Transportfahrzeugs (16) an dem bevorzugten Regal (12*) reversibel anbringbar ist, um das bevorzugten Regal (12*) hin zu einer durch das spezifische Speicherkriterium bestimmten Speicherposition in einem Speicherbereich (18) und umgekehrt zu bewegen;
- das Steuerungssystem mit der Ladevorrichtung (8) und dem fahrerlosen Transportfahrzeug (16) zum Steuern verbindbar ist.

11. Speichersystem (2) nach Anspruch 10, **dadurch gekennzeichnet, dass**
das Steuerungssystem ausgestaltet ist, zu bestimmen, ob eines der Regale (12) in der Nähe des Übergabebereichs (10) bereits mit einem Ladungsträger (4) beladen ist, welches mit dem Sortierkriterium des Ladungsträgers (4) übereinstimmt, und ein freies Regalfach (14), mit der Kapazität den Ladungsträger (4) aufzunehmen, aufweist, somit ein verfügbares Regal (12) ist, und dieses Regals (12) als bevorzugtes Regal (12*) zu bezeichnen, andernfalls ein verfügbares, dem Sortierkriterium des Stückguts (4a) noch nicht zugeordnetes Regal (12) als bevorzugtes Regal (12*) zu bezeichnen.

12. Speichersystem (2) nach einem der Ansprüche 10 bis 11, **dadurch gekennzeichnet, dass**
der Speicherbereich (18) auf mehr als einer Ebene (20) angeordnet ist, wobei die Ebenen (20) des Speicherbereichs (18) auf Höhe und/oder oberhalb und/oder unterhalb der Ladevorrichtung (8) liegen.

13. Speichersystem (2) nach Anspruch 12, **dadurch gekennzeichnet, dass**
die Ladevorrichtung (8) ausgestaltet ist, Regale (12) auf mehr als einer Ebene (20) zu be- und/oder entladen.

14. Speichersystem (2) nach Anspruch 12 oder 13, zudem umfassend
eine Rampe und/oder eine Hebevorrichtung, damit das bevorzugte Regal (12*) den Höhenunterschied zwischen den Ebenen (20) mit oder ohne fahrerloses Transportfahrzeug (16) zwischen den Ebenen (20) überwinden kann.

15. Speichersystem (2) nach einem der Ansprüche 10 bis 14, **dadurch gekennzeichnet, dass**
mehrere Regale (12) in dem Übergabebereich (10) derart anordenbar sind, dass die Ladevorrichtung (8) diese mehreren Regale (12) ohne Repositionierung beladen kann.
